# EUROPEAN PATENT APPLICATION

(11) **EP 4 424 536 A1**
(43) Date of publication of application: **04.09.2024**
(21) Application number: 21961703.2
(22) Date of filing: 26.10.2021
(51) Int. Cl.: B60K 6/22, B60K 6/36, F02B 61/06, F16D 1/076, F16D 1/06

(54) **HYBRID SYNERGY DRIVE, MODULAR ASSEMBLY THEREOF, AND HYBRID VEHICLE**

(71) Applicant: Zhejiang Geely Holding Group Co., Ltd., Hangzhou, Zhejiang 310051 (CN); Ningbo Geely Royal Engine Components Co., Ltd., Ningbo City, Zhejiang 315336 (CN); Aurobay Technology Co., Ltd., Ningbo City, Zhejiang 315899 (CN)
(72) Inventor: TAN, Libo, Hangzhou Bay New District Ningbo, Zhejiang 315336 (CN); QIN, Yizhi, Hangzhou Bay New District Ningbo, Zhejiang 315336 (CN); LI, Shubo, Hangzhou Bay New District Ningbo, Zhejiang 315336 (CN); YANG, Chen, Hangzhou Bay New District Ningbo, Zhejiang 315336 (CN); WANG, Ruiping, Hangzhou Bay New District Ningbo, Zhejiang 315336 (CN); SCHOLTEN, Ingo, Hangzhou Bay New District Ningbo, Zhejiang 315336 (CN)
(74) Representative: Zaboliene, Reda
(86) International application number: PCT/CN2021/126465
(87) International publication number: WO 2023/070327

(57) **Abstract**

The present disclosure provides a hybrid synergy drive and a modular component thereof, a hybrid power vehicle. The modular component include multiple types of engines and multiple types of transmission systems, any type of engine and any type of gearbox can be connected to each other based on their respective first connection interface and second connection interface, and are assembled to a type of power package including an engine and a transmission system. In the present disclosure, based on the requirements of types of vehicles for hybrid synergy drive, design requirements are met through different combinations of modular components, shortening the development cycles of types of vehicles, reducing difficulty in parts management, so that the costs of a single hybrid power vehicle is also reduced accordingly.

## Description

### Technical Field

Embodiments of the present disclosure relate to, but are not limited to power technologies, and more specifically, relate to a hybrid synergy drive and modular component thereof, and a hybrid power vehicle.

### Background Art

Hybrid synergy drive (HSD) is a power technology developed for hybrid power vehicles. Hybrid power vehicles adopt traditional internal combustion engines (diesel engines or gasoline engines) and electric motors as power sources, and the driving power of vehicles is provided by a single drive system or jointly provided based on the actual vehicle driving state. Hybrid synergy drives not only take advantage of the continuous and efficient operation of engines and their good power performance, but also take advantage of the pollution-free and low-noise of electric motors.

### Summary of the Invention

With the popularity of types of vehicles with hybrid synergy drive configuration in the market and national emission and fuel consumption requirements, when they are configured in different vehicle type architectures, the hybrid synergy drives differ greatly in structure. Different vehicle type architectures need to be equipped with different styles of hybrid synergy drives, which will lengthen the development cycles of types of vehicles, increase the difficulty in parts management, so that the inherent costs of a single hybrid power vehicle is increased.

The following is an overview of the topics described herein in detail. The overview is not intended to limit the protection scope of the claims.

In an embodiment of the present disclosure is provided a modular component of a hybrid synergy drive, including: multiple types of engines, which all are provided with first connection interfaces; and multiple types of transmission systems including gearboxes, which all are provided with second connection interfaces; characterized in that the multiple types of engines and the multiple types of transmission systems can form multiple types of power packages for the hybrid synergy drive, and, any type of engine and any type of gearbox can be connected to each other based on their respective first connection interface and second connection interface, and are assembled into a power package including an engine and a transmission system.

In an embodiment of the present disclosure is also provided a hybrid synergy drive, including an engine, a transmission system and a power battery, characterized in that the engine and the transmission system are assembled from a type of engine and a type of transmission system in the modular component as described in any embodiment of the present disclosure; or the engine, the transmission system and the power battery are assembled from a type of engine, a type of transmission system and a type of power battery in the modular component as described in any embodiment of the present disclosure.

In an embodiment of the present disclosure is also provided a hybrid power vehicle, which includes a vehicle body and a hybrid synergy drive installed on the vehicle body, with the hybrid synergy drive including an engine, a transmission system and a power battery, characterized in that the engine and the transmission system have respective independent housings, the engine is provided with a first connection interface, the transmission system is provided with a second connection interface, and the engine and the transmission system are connected to each other through the first connection interface and the second connection interface; and the engine and the transmission system are arranged side by side along the radial direction of the vehicle body at the head of the vehicle body.

Other aspects will be apparent after reading and understanding the accompanying drawings and detailed description.

### Brief Description of the Drawings

The accompanying drawings are used to provide an understanding of embodiments of the present disclosure and constitute a part of the specification. They are used to explain technical solutions of the present disclosure together with the embodiments of the present disclosure, and do not constitute a limitation of the technical solutions of the present disclosure.
FIG. 1 is a schematic diagram of multiple types of engines and multiple types of transmission systems being combined into multiple types of power packages, according to an embodiment of the present disclosure.
FIG. 2 is a schematic diagram of multiple types of engines, multiple types of transmission systems and multiple types of power batteries being combined into multiple types of power configurations, according to an embodiment of the present disclosure.
FIG. 3 is a perspective view of an exemplary first transmission member according to an embodiment of the present disclosure.
FIG. 4 is a perspective view of an exemplary second transmission member according to an embodiment of the present disclosure.
FIG. 5 is a perspective view of the first engine in FIG. 1.
FIG. 6 is a perspective view of the first transmission system in FIG. 1.
FIG. 7 is a perspective view of the second transmission system in FIG. 1.
FIG. 8 is a front view of the second engine in FIG. 1.
FIG. 9 is a schematic diagram of a wiring harness plug-in being connected to a first power battery, according to an embodiment of the present disclosure.
FIG. 10 is a schematic diagram of a wiring harness plug-in being connected to a control unit of a first transmission system, according to an embodiment of the present disclosure.
FIG. 11 is a schematic diagram of the first power battery in FIG. 2 being electrically connected to a first transmission system through a wiring harness plug-in.
FIG. 12 is a schematic diagram of the first power battery in FIG. 2 being electrically connected to a second transmission system through a wiring harness plug-in.
FIG. 13 is a schematic diagram of an engine, a transmission system and a power battery being installed on a vehicle body according to an embodiment of the present disclosure.

### Detailed Description of the Invention

Multiple embodiments are described in the present disclosure, but their descriptions are illustrative rather than restrictive, and it is obvious to those skilled in the art that there can be more examples and implementations within the scope included by the embodiments described in the present disclosure.

In the description of the present disclosure, "exemplary" or "such as" and other words are used to mean an example, illustration or explanation. Any embodiment described in the present disclosure as "exemplary" or "such as" should not be construed as preferred to or advantageous over other embodiments. "And/or" herein is a description of the relationships between associated objects, indicating that there can be three relationships, and for example, A and/or B can mean the following three situations: A exists alone, A and B exist simultaneously, and B exists alone. "Multiple" means two or more than two. In addition, to facilitate a clear description of the technical solutions in the embodiments of the present disclosure, "first", "second" and other words are used to distinguish the same or similar items with basically the same functions and effects. Those skilled in the art can understand that "first", "second" and other words do not limit the number and execution order, and "first", "second" and other words are not limited to being necessarily different.

In describing representative exemplary embodiments, the specification may have presented a method and/or process as a specific order of steps. However, to the extent that the method or process do not rely on the specific order of steps described herein, the method or process should not be limited to steps of the specific order described. As those skilled in the art will appreciate, other step orders are also possible. Therefore, the specific order of steps set forth in the specification should not be construed as limiting the claims. Furthermore, claims directed to the method and/or process should not be limited to performing their steps in the written orders, those skilled in the art will readily appreciate that these orders can be varied and still remain within the spirit and scope of the embodiments of the present disclosure.

A hybrid synergy drive includes major equipment such as an engine, a transmission system, and a power battery.

In a hybrid synergy drive, a gearbox and an engine are usually integrated together, which has certain advantages in costs, but has poor universality. If the vehicle type architecture is different, the required the hybrid system has different requirements for power, torque increase, or emission and fuel consumption, it will be necessary to re-open the mold and design a different style of hybrid synergy drive, which will lengthen the development cycles of types of vehicles and make parts management difficult, increases the inherent costs.

In a hybrid synergy drive, a power battery is placed in a trunk of a vehicle. With the increase in energy and power requirements, the size of the power battery will also increase, occupying the use space in the trunk and reducing the available space in the trunk. Moreover, there are different power requirements under different vehicle type architectures, and the size of the power battery will also change accordingly, making the position of an architecture frame for installing the power battery and the size of the occupied space different, which is not conducive to the installation and interchangeability of the power battery.

In a hybrid synergy drive, a power control unit is integrated with a transmission system, and the power control unit and the power battery are connected through a wiring harness plug-in. As the configurations and installation position of the hybrid synergy drive change, the installation interfaces and bending shape of the wiring harness plug-in also need to be changed accordingly, so that there are problems of universality and interchangeability occurring the wiring harness plug-in, failing to achieve the plug-and-play purpose.

In an embodiment of the present disclosure is provided a modular component of a hybrid synergy drive, including: multiple types of engines, which all are provided with first connection interfaces; and multiple types of transmission systems including gearboxes, which all are provided with second connection interfaces; characterized in that the multiple types of engines and multiple types of transmission systems can form multiple types of power packages for the hybrid synergy drive, and any type of engine and any type of gearbox can be connected to each other based on their respective first connection interface and second connection interface, and can be assembled into a power package including an engine and a transmission system.

The modular component in the embodiment can be applied to various types of hybrid power vehicle architectures as needed. Under the condition of fully analyzing the structural characteristics of the modular component, several types of engines and several types of transmission systems are developed, and then different combinations are used to meet different requirements for power, economy, emission and fuel consumption of types of current and future vehicles. It is only necessary to develop M types of engines and N types of transmission systems to obtain M by N types of power packages, suitable for hybrid synergy drive requirements of various types of hybrid power vehicles. For different types of vehicle, the design requirements can be met by changing one or more modular components assembled, thereby shortening the development cycles of types of vehicles, reducing the difficulty in parts management, and reducing the costs of a single hybrid power vehicle accordingly.

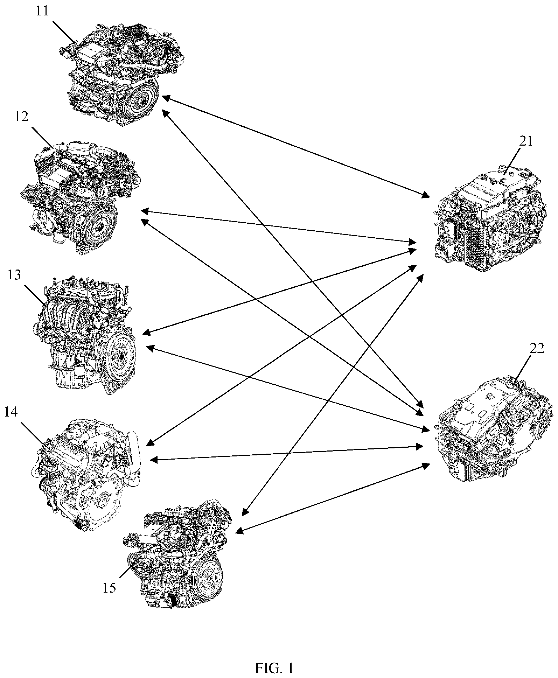

As shown in FIG. 1, it is an exemplary modular component of a hybrid synergy drive, including five types of engines and two types of transmission systems. The 5 types of engines are respectively a first engine 11, a second engine 12, and a third engine 13, a fourth engine 14 and a fifth engine 15; the two transmission systems are respectively a first transmission system 21 and a second transmission system 22. The five types of engines all are equipped with first connection interfaces, and the two types of transmission systems both include gearboxes and are provided with second connection interfaces. Both the first connection interface and the second connection interface in the embodiment are universal interfaces, and namely, the first connection interface of any type of engine and the second connection interface of any type of transmission system can be connected to each other.

Based on the universality of the connection interfaces, any type of engine and any type of gearbox can be connected to each other based on their respective first connection interface and second connection interface. For example, the first engine 11 and the first transmission system 21 can be assembled into a first type of power package, the first engine 11 and the second transmission system 22 can also be assembled into a second type of power package, the second engine 12 and the first transmission system 21 can be assembled into a third type of power package, the second engine 12 and the second transmission system 22 can be assembled into a fourth power package, and the like, a total of ten types of power packages can be assembled, thus obtaining ten types of hybrid synergy drives with different power packages. It should be noted that a hybrid synergy drive using the modular component can also include the non-modular component. For example, based on the example in FIG. 1, a type of engine can also be designed that can only be assembled with the first transmission system and cannot be assembled with the second transmission system, or a type of transmission system is designed that can only be assembled with the first engine and the second engine into a power package and cannot be assembled with other engines. These components are not universal and do not belong to modular components of the present disclosure. It is easy to understand that the smallest modular component includes two types of engines and two types of transmission systems, which can be combined arbitrarily into at least four types of power packages.

In the embodiment, among the multiple types of engines, different engines differ in at least one or more of the following parameters: power, torque, compression ratio, the number of cylinders, the number of valves, displacement, and cylinder arrangement. In an example, multiple types of engines have different power values, covering the power range of 70 KW to 180 KW, such as 70 KW, 90 KW, 110 W, 150 KW, and 180 KW respectively. In another example, multiple types of engines can also partially have the same power value, but engines with the same power value have different torque values, and for example, the five types of engines respectively have power values of 70 KW, 90 KW, 90 W, 120 KW, and 150 KW; a type of 90 KW engine has a torque value of 1500 Nm, and another type of 90 KW engine has a torque value of 2000 Nm. Among the multiple types of transmission systems, different transmission systems have different hybrid power architectures, and for example, they can differ in the number of gears, transmission ratio of each gear, and driving mode (such as series type, parallel type, hybrid type, power split type), etc.

As described above, any type of engine and any type of gearbox as the modular component in the embodiment are assembled together through their respective first connection interface and second connection interface, and namely, the engine and the gearbox have respective independent housings. Power transmission is required between the engine and the gearbox, so the first connection interface and the second connection interface need to realize the transmission function.

In an exemplary embodiment, the first connection interface includes a first transmission member detachably connected to a flywheel of the engine, and the second connection interface includes a second transmission member detachably connected to a drive shaft of the gearbox; there are many types of both first transmission members and second transmission members, the first transmission members and the second transmission members that match each other form multiple types of transmission member combinations, respectively used to realize power transmission between engines and gearboxes in the multiple types of power packages. For example, when a transmission system is connected to different engines, due to the different amounts of power to be transmitted, it is not the best choice to use the same mechanism to transmit power considering mechanical strength, costs and the like. However, in the embodiment, replacing different combinations of transmission members can realize power transmission between engines and transmission systems in different power packages. It should be noted that this does not mean that different power packages must use different combinations of transmission members to realize power transmission, and for example, ten types of power packages can use ten different combinations of transmission members or only 2 to 9 different combinations of transmission members to transmit power.

In an exemplary embodiment, to save costs and facilitate replacing combinations of transmission members, one of the first transmission member and the second transmission member in the combination of transmission members includes a spline shaft, and the other thereof includes a spline sleeve. The spline shaft and the spline sleeve are respectively connected to the transmission parts of the engine and the transmission system, the power transmission between the engine and the transmission system is realized through the cooperation of the spline shaft and the spline sleeve.

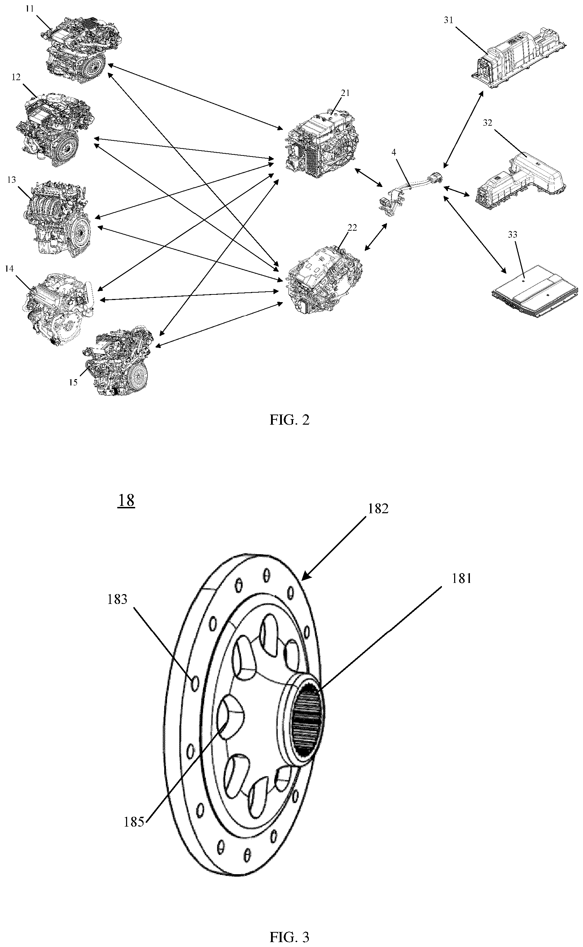

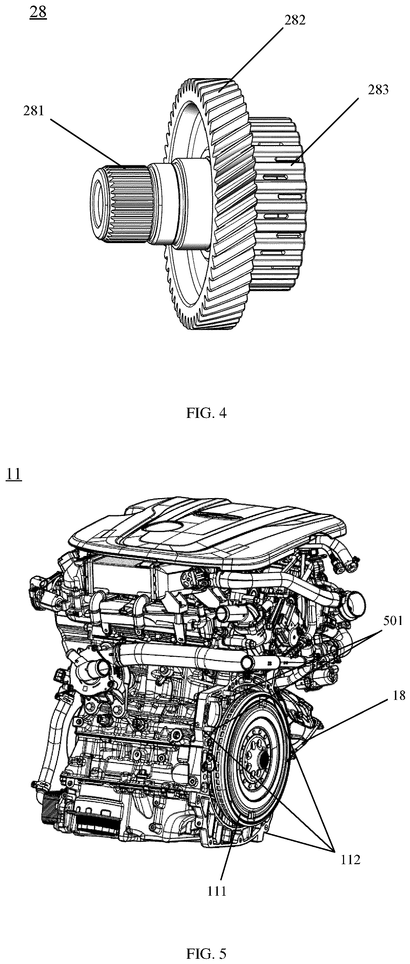

A three-dimensional view of an exemplary first transmission member 18 is shown in FIG. 3. The first transmission member 18 includes a spline sleeve 181 and a chassis 182. The chassis 182 is circumferentially provided with multiple spaced mounting holes 183, for fixedly installing the chassis 182 on the flywheel of the engine through their cooperation with bolts. The spline sleeve 181 is provided on one side of the middle of the chassis 182. The chassis 182 are also provided with several circular through holes 185 between the spline sleeve 181 and the mounting holes 183, for bolts to pass through them. The wall thickness of the spline sleeve 181 gradually increases from one end away from the chassis 182 to the other end connected to the chassis 182 to ensure mechanical strength. In the first engine 11 shown in FIG. 5, the first transmission member 18 is installed on the flywheel 111 of the first engine 11 through bolts, and as the flywheel 111 rotates, the first transmission member 18 will rotate accordingly.

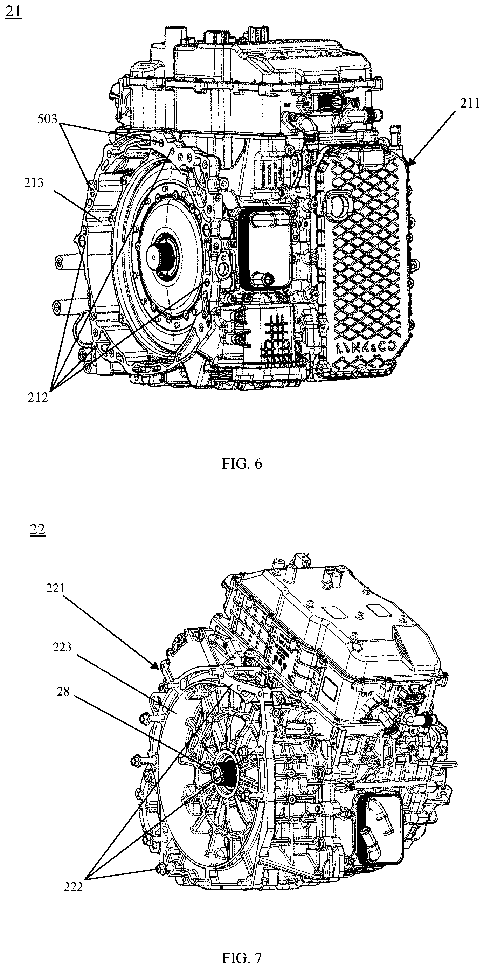

A perspective view of an exemplary second transmission member 28 is shown in FIG. 4. The second transmission member 28 includes a spline shaft 281, a gear 282 and a first transmission end 283 of a clutch. The spline shaft 281 is provided with splines at one end, the gear 282 is sleeved on the spline shaft 281, and the first transmission end 283 of the clutch is fixed on the side of the gear 282 away from the splines. In the first transmission system 21 shown in FIG. 7, the second transmission member 28 is installed on the housing of a gearbox 211 through bearings, and the drive shaft in the gearbox arranged coaxial with the spline shaft 281, is provided with a second transmission end (not shown in the figure) of the clutch. When the first transmission end and the second transmission end of the clutch are combined, the spline shaft can be connected to the drive shaft in the gearbox to achieve power transmission; when the first transmission end and the second transmission end of the clutch are in a separated state, the second transmission member 28 can be detached from the transmission system. It should be noted that the second transmission member 28 in the present disclosure is not limited to the structure shown in FIG. 4, and the configurations of the gear 282 and the clutch 283 are related to the design of the specific hybrid power architecture of the transmission system and are not necessary to the second transmission member include. For example, the second transmission member can only include a spline shaft, which is connected (such as key connected, spline connected, pin connected, set screw connected) to the drive shaft in the gearbox through a coupling to realize power transmission; and alternatively, the second transmission member only includes a spline shaft and a gear sleeved on the spline shaft, and can realize its transmission connection with the drive shaft in the gearbox through a gear pair; and so on.

Referring to FIGS. 5 and 6, during installation, the spline shaft of the second transmission member 28 installed on the first transmission system 21 is inserted into the spline sleeve of the first transmission member 18 installed on the first engine 11, thereby enabling the power transmission from the first engine 11 to the first transmission system 21.

In different transmission packages, due to different parameters such as engine power and torque, or different transmission ratios, driving modes and loads resulting from different hybrid power architectures of transmission systems, and other reasons, the power to be transmitted between engines and transmission systems varies. At this time, different power transmission requirements can be met by replacing the combination of transmission members. To facilitate replacement, the different first transmission members in embodiments of the present disclosure have basically the same chassis and spline sleeves, except that the numbers of teeth on the inner walls of the spline sleeves are different; and structures (such as screw holes) for installing the first transmission members which the flywheels of different engines are provided with, can be also configured to be the same, and any type of first transmission member can be directly assembled on the flywheel of any type of engine. Correspondingly, the spline shafts of different second transmission members have the same axial length, except that the numbers of teeth of external splines are different. The gearboxes in different transmission systems can have the same structures for installing the second transmission members. FIG. 7 shows a structural diagram of a second transmission system after a second transmission member is installed on it. When the second transmission system 22 and the first engine in FIG. 5 form a power package, compared with the second transmission member installed on the second transmission system in FIG. 6, the number (for example, 33) of teeth on the spline shaft in the second transmission member in FIG. 7 is different from that (for example, 36) on the spline shaft in the second transmission member in FIG. 6. Correspondingly, if the first engine in FIG. 5 is assembled with the first transmission system, the first transmission member can be used whose spline sleeve has 36 teeth. If the first engine is assembled with the second transmission system, the first transmission member can be used whose spline sleeve has 33 teeth.

In other words, to achieve different needs for power transmission between engines and transmission systems in different power packages, it is only necessary to replace one combination of transmission members, which is very convenient, fast and cost-saving. In the embodiment, the spline shafts used in different combinations of transmission members can have the same the axial length, and can also have the same shaft diameter, but the external splines have different numbers of teeth, and the external splines can also have different diameters, and therefore, it can also be directly determined that the inner walls of the matching spline sleeves have different numbers of teeth. In an example, the spline shafts and the spline sleeves in different combinations of transmission members have respectively the numbers of teeth of 25, 27, 31, 33, 35, 37 and 39; when the external splines have different numbers of teeth and different diameters, the teeth for transmission have different structures and strengths, which can meet different power transmission needs when five types of engines and two types of transmission systems are combined.

In an exemplary embodiment of the present disclosure, the engine and the gearbox are fixedly connected to ensure the stability of power transmission between the engine and the transmission system. To this end, in the embodiment of the present disclosure, the first connection interface includes a first connection frame fixedly connected to the housing of the engine, and the first connection frame is provided with multiple first mounting structures; and the second connection interface includes a second connection frame fixedly connected to the housing of the gearbox, and the second connection frame is provided with multiple second mounting structures.

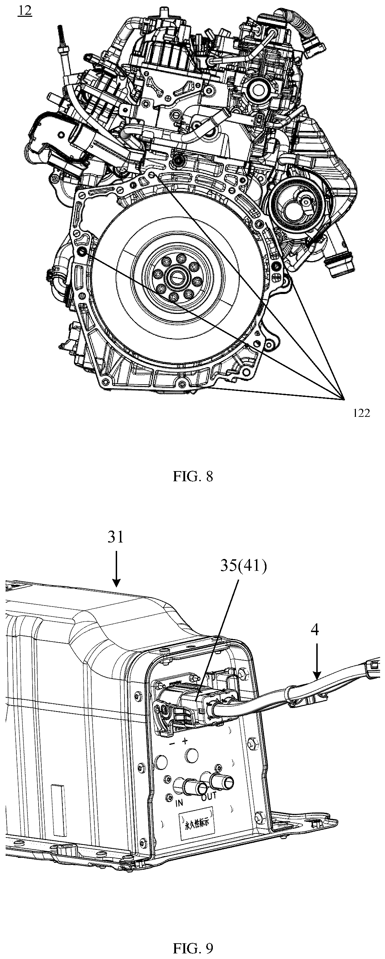

Exemplarily, FIG. 5 shows a first connecting frame 112 on the first engine 11, FIG. 8 shows a first connecting frame 122 on the second engine 12, FIG. 6 shows a second connecting frame 212 and a stop structure 213 corresponding to a flywheel, which are provided on the gearbox 211 of the first transmission system 21, and FIG. 7 shows a second connecting frame 222 and a stop structure 223 corresponding to a flywheel, which are provided on a gearbox 221 of the second transmission system 22. Referring to the above accompanying drawings, the first connecting frames of multiple types of engines in the embodiment all are provided around the flywheels of the engines and can be fixed on the housings of the engines. The gearboxes of multiple types of transmission systems in the embodiment all are provided with the stop structures corresponding to the flywheels, and the stop structures in different transmission systems have the same size. The second connecting frames of multiple types of transmission systems in the embodiment all are provided around the stop structures and can be fixed on the housings of the gearboxes. The configurations of the stop structures can assist positioning on the one hand, and on the other hand, can withstand radial shear forces between the engines and the gearboxes to ensure the reliability of their connection.

To facilitate the connection between any type of engine and any type of transmission system, the first connecting frame of any type of engine needs to be alignment connected to the second connecting frame of any type of transmission system. To this end, in the embodiment, the multiple first mounting structures of any type of engine respectively correspond to the positions of multiple second mounting structures of any type of gearbox. The alignment connection between the multiple first mounting structures and the multiple second mounting structures, can realize a fixed connection between the engine and the gearbox in the power package. Referring to the example shown in FIGS. 5 and 6, one of the first mounting structure and the second mounting structure alignment connected includes a stud 501, and the other thereof includes a mounting hole 503, and the stud 501 can pass through the mounting hole 503 and can be fastened. In another example, both the first mounting structure and the second mounting structure alignment connected are mounting holes, and the alignment connection can be realized by a bolt passing through the two mounting holes and being fastened. For the present disclosure, it is not required that the multiple first mounting structures of different engines have exactly the same number and positions, and that the multiple second mounting structures of different transmission systems have exactly the same number and positions; as long as there are a sufficient number of first mounting structures and second mounting structures that can be alignment connected between the engine and the transmission system to ensure reliable fixation between the two, when assembling different power packages.

In the embodiment, a universal stop structure size and connection fixing structure are adopted, so that the connection interfaces of the multiple types of engines and the multiple types of transmission systems are universal. Through interchangeable installation, different engines or transmission systems can be quickly replaced and assembled into different power packages.

In an exemplary embodiment of the present disclosure, the transmission system further includes a first motor which is integrated with the gearbox. In another exemplary embodiment of the present disclosure, the transmission system further includes a first motor and a second motor which both are integrated with the gearbox. The transmission system in the embodiment fully considers the power characteristics requirements for output torque. The two types of transmission systems adopt the dual-motor intelligent multi-mode drive design logic, use the logic of the clutch's direct switch of single-gear or multi-gear, and cooperates with dual motors, to fully reflect the operating point of the high-efficiency area of the motors.

In the present disclosure is further provided a modular component of a hybrid synergy drive, including: multiple types of engines, which all are provided with first connection interfaces; and multiple types of transmission systems including gearboxes, which all are provided with second connection interfaces; characterized in that the multiple types of engines and the multiple types of transmission systems can form multiple types of power packages for the hybrid synergy drive, any type of engine and any type of gearbox can be connected to each other based on their respective first connection interface and second connection interface, and are assembled into a type of power package including an engine and a transmission system; characterized in that the modular component further includes: multiple types of power batteries, which all are provided with first electrical interfaces; characterized in that the multiple types of transmission systems all include control units integrated with or connected to the gearboxes, and the control units of the multiple types of transmission systems all are provided with second electrical interfaces; and characterized in that the multiple types of engines, the multiple types of transmission systems and the multiple types of power batteries can form multiple types of power configurations for the hybrid synergy drive, the control unit in any type of power package and any type of power battery can be electrically connected based on their respective first electrical interface and second electrical interface, and are assembled into a type of power configuration including an engine, a transmission system and a power battery.

The modular component in the embodiment can not only combine multiple types of engines and multiple types of transmission systems into multiple types of power packages, but also combine multiple types of engines, multiple types of transmission systems, and multiple types of power batteries together into multiple types of power configurations. The development of M types of engines, N types of transmission systems and L types of power batteries can obtain M by N by L types of power configurations, which can meet the power, economy, emission or fuel consumption requirements of various types of current and future vehicle to a greater extent. Different design requirements can be met by changing one or more modular components, thereby shortening the development cycle of a type of vehicle, reducing the difficulty in parts management, and reducing the costs of a single hybrid power vehicle.

The combination of multiple types of engines and multiple types of transmission systems in the embodiment is the same as that in the embodiment shown in FIG. 1, including 5 types of engines and 2 types of transmission systems, and additionally, the modular component of the hybrid synergy drive in the embodiment includes multiple types of power batteries. In the example in FIG. 2 are shown three types of power batteries: a first power battery 31, a second power battery 32 and a third power battery 33. These three types of power batteries have different capacities and can provide different cruising ranges and can also affect indicators such as power performance, fuel consumption, emission and the like, and support the battery matching architecture requirements of Hybrid Electric Vehicles (HEVs), plug in Hybrid Electric Vehicles (P-HEVs) and later Electric Vehicles (EVs) in the power architecture. In an example, the three types of power batteries meet the design requirements for battery capacity from 0.5 KWh to 50 KWh. The power batteries can use high-power and high-density cells with different chemical compositions of ternary lithium/lithium iron phosphate, and water-cooling structures to achieve characteristics of small size and high energy.

In the embodiment, the modular component including five types of engines, two types of transmission systems, and three types of power batteries, can be assembled into a total of ten different types of power packages and thirty different types of power configurations, namely, thirty different types of hybrid synergy drives. Such multiple types of hybrid synergy drives can cover a very wide power range, torque range and battery capacity range to meet the needs for various scenarios. In an example, in the power range covered by the multiple types of power packages, the minimum power is greater than or equal to 50 KW and less than or equal to 100 KW, and the maximum power is greater than or equal to 150 KW and less than or equal to 300 KW; in the output torque range covered by the multiple types of power packages, the minimum torque is greater than or equal to 1000 Nm and less than or equal to 3000 Nm, and the maximum torque is greater than or equal to 4000 Nm and less than or equal to 6000 Nm; in the capacity range covered by the multiple types of power packages, the minimum capacity is greater than or equal to 0.5 KWh and less than or equal to 10 KWh, and the maximum capacity is greater than or equal to 15 KWh and less than or equal to 50 KWh.

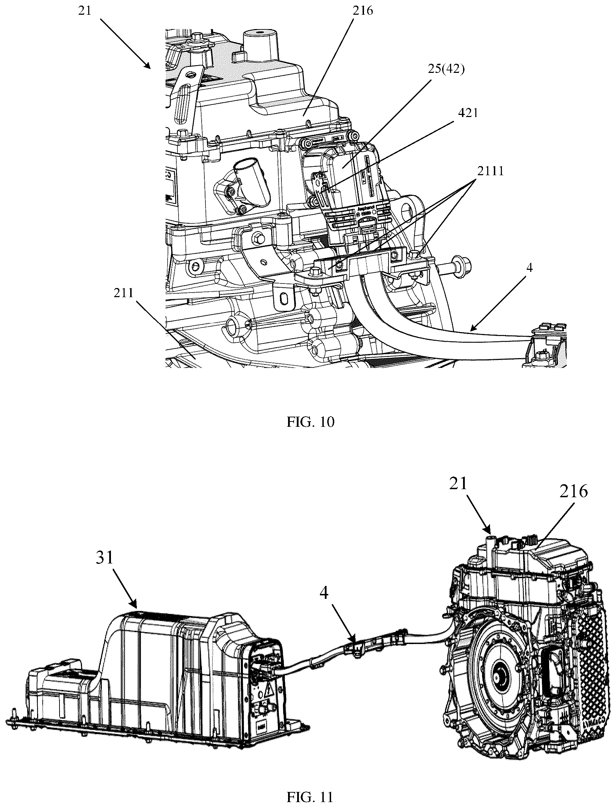

As shown in FIG. 2, any of the three types of power batteries can be electrically connected to a control unit (such as a power control unit) of any of the two types of transmission systems through a wiring harness plug-in 4. Referring to FIGS. 9 and 10, in the embodiment, both a first electrical interface 35 and a second electrical interface 25 are configured as electrical socket structures. The electrical connection between the first electrical interface 35 and the second electrical interface 25 is realized by the respective plug connection of the first electrical interface 35 and the second electrical interface 25 to a first plug and a second plug at both ends of the wiring harness plug-in 4. To achieve plug and play, in an example, the first electrical interfaces 35 of multiple types of power batteries have the same shape and connection terminal configuration, and first plugs 41 matching and plug connected to the first electrical interfaces 35, of the wiring harness plug-ins 4 used in different power configurations, have the same shape and connection terminal configuration; the second electrical interfaces 25 of control units in multiple types of transmission systems have the same shape and connection terminal configuration, and the second plugs 42 matching and plug connected to the second electrical interface 25, of the wiring harness plug-ins 4 used in different power configurations, have the same shape and connection terminal configuration. In other words, the plugs at both ends of the wiring harness plug-ins used in different power configurations can be used universally. These plugs and sockets can be designed to follow uniform terminal standards.

In the embodiment, in the design of wiring harnesses and interfaces, the universality requirements of each interface are considered and standardized definitions of terminals for software and hardware interfaces are achieved, which enables the plug and play of the wiring harness and terminals after modular components are determined, thus meeting the interchangeability between various current architectures and modular components.

FIG. 9 shows the structure of the first electrical interface 35 of the first power battery 31 being plug connected to the first plug 41 of the wiring harness plug-in 4.

FIG. 10 shows the structure of a second electrical interface 25 of a control unit 216 in the first transmission system 21 being plug connected to the second plug 42 of the wiring harness plug-in 4. To ensure the connection stability, in the example shown in the figure, the second plug 42 has a self-locking pull-out buckle 421, and the connection terminal of the second plug 42 can also have a self-locking, self-checking and error-proofing function. The gearbox 211 is provided below the control unit 216. To ensure the connection stability, the gearbox 211 is also provided with a locking mechanism 2111 close to the second electrical interface 25 on the control unit 216, fixing second plug 42 of the wiring harness plug-in 4 and the connected wiring harness on the housing of the gearbox 211 or the control unit 216 through screws. Only by pulling out the self-locking pull-out buckle 411 and loosening the screws, can the connection between the second plug 42 and the second electrical interface 25 be disconnected, which has a double insurance function.

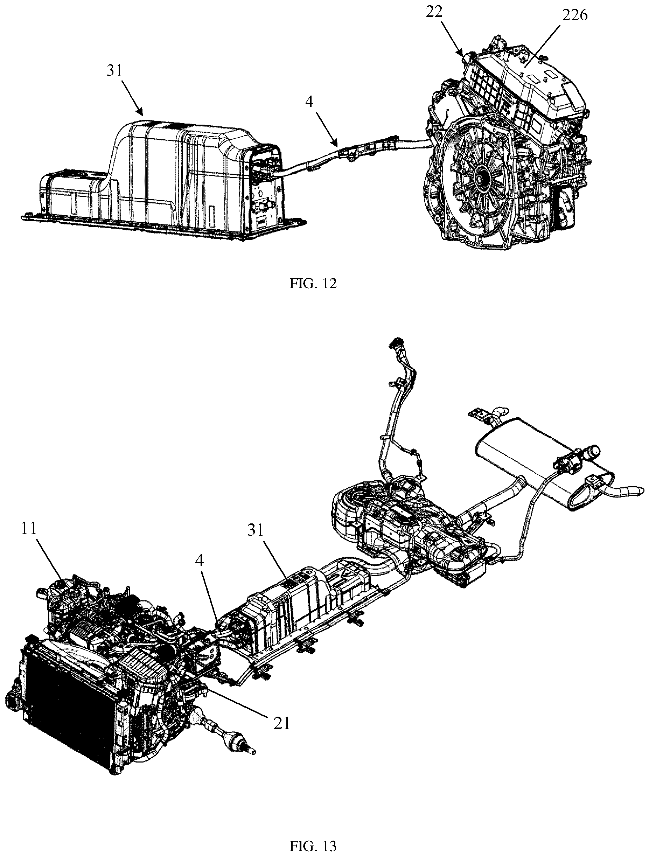

FIG. 11 shows a schematic diagram of the electrical connection between the first power battery 31 and the control unit 216 of the first transmission system 21 through the wiring harness plug-in 4. FIG. 12 shows a schematic diagram of the electrical connection between the first power battery 31 and the control unit 216 of the second transmission system 22 through the wiring harness plug-in 4. Referring to the two accompanying drawings, to facilitate installation, the first electrical interfaces of multiple types of power batteries in the embodiments of the present disclosure all are provided on the side surfaces facing the transmission systems when the power batteries are assembled, and the second electrical interfaces of the control units in multiple types of transmission systems all are provided on the side surfaces facing the power batteries when the control units are assembled. Since the plugs at both ends of the wiring harness plug-in in the embodiment can be used universally and need roughly the same bending shapes, in the embodiment the same wire harness plug-in can be used to realize the electrical connection between any type of power battery and the control unit in any type of transmission system, thus enabling plug and play across architectures.

In the above embodiments of the present disclosure, the modular components including engines, transmission systems and power batteries, have universality and interchangeability under the connection of plug-and-play wiring harness plug-ins, so that it is possible to make diversified combinations of engines, transmission systems, power batteries, etc., which meets different architecture design logics, meets the power and economic requirements of hybrid synergy drives to the maximum extent, can also meet the current and future emission and fuel consumption regulations to the maximum extent, and enables the assembled hybrid synergy drives to apply to many types of vehicles.

Specifically, the modular components in the embodiments of the present disclosure have at least the following characteristics.

Structures are universal. It facilitates the adoption of standardized management, shortens the development cycles and costs of later products, enables the assembled hybrid synergy drives to be used in vehicles of various architectures.

Power and torque are varied. The modular components can achieve different power and torque outputs through different assembly modes with the installation dimensions unchanged. For example, when a type of transmission system is assembled with different engines, it is possible to obtain multiple types of power packages with different power and torque configurations; different power batteries can also be configured to meet the needs of different types of vehicles for cruising, power, emission, fuel consumption, etc.

Interfaces are plug-and-play. The interchangeability design of the interface plug-ins is fully considered in the embodiment, so that it is possible to connect in a plug-and-play installation mode, which improves the interchangeability between modular components, solves the problem of device universality and saves installation time, and also solves the problem of production line universality, so that the process assembly line can achieve final assembly on the same platform.

The modular component designs in the embodiments of the present disclosure can be used across architectures and can be matched differently according to customer needs to best meet market customers' needs for hybrid synergy drives.

In an embodiment of the present disclosure is also provided a hybrid synergy drive, which includes an engine, a transmission system and a power battery, and the engine and the transmission system are assembled from a type of engine and a type of transmission system in the modular component described in any embodiment of the present disclosure; alternatively, the engine, transmission system and power battery are assembled from a type of engine, a type of transmission system and a type of power battery in the modular component described in any embodiment of the present disclosure.

In an embodiment of the present disclosure is also provided a hybrid power vehicle, which includes a vehicle body and a hybrid synergy drive installed on the vehicle body, the hybrid system includes an engine, a transmission system and a power battery, the engine and the transmission system have respective independent housings, the engine is provided with a first connection interface, the transmission system is provided with a second connection interface, the engine and the transmission system are connected to each other through the first connection interface and the second connection interface, and, the engine and the transmission systems are arranged side by side along the radial direction of the vehicle body at the head of the vehicle body.

In an exemplary embodiment of the present disclosure, the hybrid synergy drive adopts the hybrid synergy drive as described in any embodiment of the present disclosure, and that is, the engine and transmission system in the hybrid synergy drive are assembled from a type of engine and a type of transmission system in the modular component described in any embodiment of the present disclosure; alternatively, the engine, the transmission system and the power battery in the hybrid synergy drive are assembled from a type of engine, a type of transmission system and a type of power battery in the modular component described in any embodiment of the present disclosure.

The engine and the transmission in the embodiment are connected by radial extension during assembly. By designing universal installation connection modes, various modular components can be installed and interchanged with each other. By changing a single modular component (such as engine or transmission), it is possible to meet the design requirements of different combinations under the same architecture to the maximum extent, so that the same vehicle can also have different driving experiences of power and fuel consumption. In an example, five types of engine modules and two types of gearbox modules form ten types of power packages, covering the power output capability with output power of 70 KW to 180 KW and with output torque of 2000 Nm to 5000 Nm.

In an exemplary embodiment of the present disclosure, the power battery is installed at a position between a front axle and a rear axle at the bottom of a vehicle body. In the embodiment, the power battery (also called battery pack) is installed in the bottom space of the vehicle body. The center console space can be used for a low-capacity power battery. Since the engine and transmission system in the embodiment are connected by radial extension, the power battery can have the same axial installation dimensions under different architectures, achieving the design goal of the same module across architectures. For a medium and high-capacity power battery, to make full use of the bottom size of the vehicle frame, the power battery can adopt an ultra-thin design (for example, the third power battery 33 in FIG. 2) and an embedded installation mode. Under different architectures, the axial bottom plate has the unchanged installation dimensions to meet the embedded installation of the power battery. It is also possible to meet the different power and fuel consumption requirements of the same type of vehicle when using different power configurations.

As shown in FIG. 13, the first engine 11 and the first transmission system 21 are arranged side by side along the radial direction of the vehicle body at the head of the vehicle body, and are connected to each other and assembled into a power package. The first power battery 31 is installed at a position between the front axle and the rear axle at the bottom of the head of the vehicle body, and is electrically connected to the control unit in the transmission system 21 through the wiring harness plug-in 4. In other power configurations, the engines and transmission systems are also arranged side by side along the radial direction of the vehicle body at the head of the vehicle body, and the power batteries are also installed at a position between the front axle and the rear axle at the bottom of the head of the vehicle body, which are not shown one by one.

It should be noted that in the hybrid power vehicle in the embodiments of the present disclosure, the engine and transmission system are arranged side by side along the radial direction of the vehicle body at the head of the vehicle body, and the power battery is installed between the front axle and the rear axle at the bottom of the vehicle body, the hybrid synergy drive of a hybrid power vehicle with this structure is not limited to being assembled from modular components, and can also be a hybrid synergy drive composed of a non-modular engine, transmission system and power battery.

The above description is only preferred embodiments of the present invention, and does not limit the patent scope of the present invention. Equivalent structural transformations made by using the contents of the description and accompanying drawings of the present invention under the conception of the present invention, or direct/indirect applications to other related technical fields, are included in the patent protection scope of the present invention.

## Claims

1. A modular component of a hybrid synergy drive, **characterized by** comprising:
multiple types of engines, which all are provided with first connection interfaces; and
multiple types of transmission systems comprising gearboxes, which all are provided with second connection interfaces;
wherein the multiple types of engines and multiple types of transmission systems can form multiple types of power packages for the hybrid synergy drive, any type of engine and any type of gearbox can be connected to each other based on their respective first connection interface and second connection interface, and can be assembled into a power package comprising an engine and a transmission system.

2. The modular component according to claim 1, **characterized in that**
the modular component further comprises multiple types of power batteries, which all are provided with first electrical interfaces;
the multiple types of transmission systems all comprise control units integrated with or connected to the gearboxes, and the control units of the multiple types of transmission systems all are provided with second electrical interfaces; and
the multiple types of engines, the multiple types of transmission systems and the multiple types of power batteries can form multiple types of power configurations for the hybrid synergy drive, wherein the control unit in any type of power package and any type of power battery can be electrically connected based on their respective first electrical interface and the second electrical interface, and be assembled into a type of power configuration comprising an engine, a transmission system and a power battery.

3. The modular component according to claim 2, **characterized in that**
both the first electrical interface and the second electrical interface are configured as electrical socket structures, and the electrical connection between the first electrical interface and the second electrical interface is achieved by the respective plug connection of the first electrical interface and the second electrical interface to a first plug and a second plug at both ends of a wiring harness plug-in.

4. The modular component according to claim 3, **characterized in that**
the first electrical interfaces of the multiple types of power batteries have the same shape and connection terminal configuration, and the first plugs matching and plug connected to the first electrical interfaces, of the wiring harness plug-ins used in different power configurations, have the same shape and connection terminal configuration;
the second electrical interfaces of the control units in the multiple types of transmission systems have the same shape and connection terminal configuration, and the second plugs matching and plug connected to the second electrical interfaces, of the wiring harness plug-ins used in different power configurations, have the same shape and connection terminal configuration.

5. The modular component according to claim 3 or 4, **characterized in that**
the first electrical interfaces of the multiple types of power batteries all are all provided on the side surfaces facing the transmission systems when the power batteries are assembled, and the second electrical interfaces of the control units in the multiple types of transmission systems all are provided on the side surfaces facing the power batteries when the control units are assembled; using the same wiring harness plug-ins in different power configurations realizes the electrical connection between the control units and the power batteries.

6. The modular component according to claim 1 or 2, **characterized in that**
the first connection interface comprises a first transmission member detachably connected to a flywheel of the engine;
the second connection interface comprises a second transmission member detachably connected to a drive shaft of the gearbox; and
there are many types of first transmission members and second transmission members, and the first transmission members and the second transmission members that match each other form multiple types of combinations of transmission member, respectively used to realize power transmission between the engines and the gearboxes in the multiple types of power packages.

7. The modular component according to claim 6, **characterized in that**
one of the first transmission member and the second transmission member in the combination of transmission members comprises a spline shaft, and the other thereof comprises a spline sleeve; and the power transmission is achieved through the cooperation of the spline shaft and the spline sleeve.

8. The modular component according to claim 6, **characterized in that**
the first transmission member comprises a chassis and a spline sleeve, the chassis is circumferentially provided with multiple spaced mounting holes for fixedly installing the chassis on the flywheel of the engine, the spline sleeve is provided on one side of the middle part of the chassis, and the wall thickness of the spline sleeve gradually increases from the end away from the chassis to the end connected to the chassis.

9. The modular component according to claim 7, **characterized in that**
the spline shafts used in different combinations of transmission members have the same diameter but different numbers of teeth.

10. The modular component according to claim 1 or 2, **characterized in that**
the first connection interface comprises a first connection frame fixedly connected to a housing of the engine, and the first connection frame is provided with multiple first mounting structures; and
the second connection interface comprises a second connection frame fixedly connected to a housing of the gearbox, and the second connection frame is provided with multiple second mounting structures;
wherein multiple first mounting structures of any type of engine and multiple second mounting structures of any type of gearbox are in one-to-one correspondence in position, and the alignment connection between multiple first mounting structures and multiple second mounting structures realizes a fixed connection between the engine and the gearbox in the power package.

11. The modular component according to claim 10, **characterized in that**
the first connecting frames of the multiple types of engines all are provided around the flywheels of the engines, the gearboxes of the multiple types of transmission systems all are provided with stop structures corresponding to the flywheels, and the second connection frames of the multiple types of transmission systems all are provided around the stop structures.

12. The modular component according to claim 10, **characterized in that**
one of the first mounting structure and the second mounting structure alignment connected comprises a stud, and the other thereof comprises a mounting hole, and the stud can pass through the mounting hole and be fastened; or
the first mounting structure and the second mounting structure alignment connected both are mounting holes, and the alignment connection is realized by a bolt passing through the two mounting holes and being fastened.

13. The modular component according to claim 1 or 2, **characterized in that**
among the multiple types of engines, different engines differ in at least one or more of the following parameters: power, torque, compression ratio, the number of cylinders, the number of valves, displacement, and cylinder arrangement; and
among the multiple types of transmission systems, different transmission systems have different hybrid power architectures.

14. The modular component according to claim 2, **characterized in that**
in the power range covered by the multiple types of power packages, the minimum power is greater than or equal to 50 KW and less than or equal to 100 KW, and the maximum power is greater than or equal to 150 KW and less than or equal to 300 KW;
in the output torque range covered by the multiple types of power packages, the minimum torque is greater than or equal to 1000 Nm and less than or equal to 3000 Nm, and the maximum torque is greater than or equal to 4000 Nm and less than or equal to 6000 Nm; and
in the capacity range covered by the multiple types of power batteries, the minimum capacity is greater than or equal to 0.5 KWh and less than or equal to 10 KWh, and the maximum capacity is greater than or equal to 15 KWh and less than or equal to 50 KWh.

15. The modular component according to claim 1 or 2, **characterized in that**
the transmission system further comprises a first motor integrated with the gearbox; or
the transmission system further comprises a first motor and a second motor, which both are integrated with the gearbox.

16. A hybrid synergy drive, comprising an engine, a transmission system and a power battery, **characterized in that**
the engine and the transmission system are assembled from a type of engine and a type of transmission system in the modular component according to any one of claims 1 to 15; or
the engine, the transmission system and the power battery are assembled from a type of engine, a type of transmission system and a type of power battery in the modular component according to any one of claims 2 to 15.

17. A hybrid power vehicle, comprising a vehicle body and a hybrid synergy drive installed on the vehicle body, with the hybrid synergy drive comprising an engine, a transmission system and a power battery, **characterized in that**
the engine and the transmission system have respective independent housings, the engine is provided with a first connection interface, the transmission system is provided with a second connection interface, and the engine and the transmission system are connected to each other through the first connection interface and the second connection interface; and
the engine and the transmission system are arranged side by side along the radial direction of the vehicle body at the head of the vehicle body.

18. The hybrid power vehicle according to claim 17, **characterized in that**
the power battery is installed at a position between a front axle and a rear axle at the bottom of the vehicle body.

19. The hybrid power vehicle according to claim 17 or 18, **characterized in that**
the hybrid synergy drive adopts the hybrid synergy drive according to claim 16.
